Europäisches Patentamt

(19) European Patent Office

Office européen des brevets

(11) Veröffentlichungsnummer: **0 120 204**
**B1**

## (12) EUROPÄISCHE PATENTSCHRIFT

(45) Veröffentlichungstag der Patentschrift:
24.06.87

(51) Int. Cl.⁴: **G 05 B 19/41**

(21) Anmeldenummer: **84100699.2**

(22) Anmeldetag: **24.01.84**

(54) Verfahren zum Wiederanfahren eines Werkzeuges an eine Werkstückkontur.

(30) Priorität: **26.03.83 DE 3311119**

(43) Veröffentlichungstag der Anmeldung:
**03.10.84 Patentblatt 84/40**

(45) Bekanntmachung des Hinweises auf die Patenterteilung:
**24.06.87 Patentblatt 87/26**

(84) Benannte Vertragsstaaten:
**AT CH DE FR GB IT LI NL SE**

(56) Entgegenhaltungen:
**DE - A - 2 642 453**
**DE - A - 2 839 736**
**FR - A - 1 549 627**
**FR - A - 2 480 963**
**GB - A - 2 082 346**

**VDI-ZEITSCHRIFT, Band 123, Nr. 15/16, August 1981,
Seiten 241-246, Düsseldorf, DE; M. VON RAVEN:
"Numerische Steuerungen (CNC)**

(73) Patentinhaber: **Dr. Johannes Heidenhain GmbH,
Nansenstrasse 17, D-8225 Traunreut (DE)**

(72) Erfinder: **Schwefel, Ernst, Dipl.-Phys.,
Reichenbergweg 2, D-8225 Traunreut (DE)**

**Beschreibung**

Die Erfindung betrifft ein Verfahren zum Wiederanfahren eines Werkzeugs an eine Werkstückkontur gemäss dem Oberbegriff des Anspruchs 1.

Aus der DE-PS 2 642 453 ist ein Verfahren zum Wiederanfahren eines gewechselten Werkzeugs aus einer definierten Position an ein Werkstück nach einer Programmunterbrechung bei rechnergesteuerten Werkzeugmaschinen bekannt. Das Programm wird unter Einbeziehung eines neuen eingegebenen Werkzeugkorrekturwertes erneut von einem vorgegebenen Anfangspunkt rein steuerungsmässig bis zu einem Endpunkt abgearbeitet, dem ein korrigierter Anfahrpunkt für das Werkzeug zugeordnet ist. Anschliessend wird das Werkzeug selbsttätig auf einer Bahn zwischen der definierten Position und dem korrigierten Anfahrpunkt zurückgefahren.

Dieses Verfahren weist aber den Nachteil auf, dass die Bestimmung dieses Endpunktes insbesondere bei komplizierten Programmen, die beispielsweise mehrere Unterprogrammebenen oder Programmteilwiederholungen aufweisen, im allgemeinen schwierig ist.

Der Erfindung liegt die Aufgabe zugrunde, ein Verfahren der eingangs genannten Art anzugeben, bei dem das Wiederanfahren eines Werkzeugs an eine Werkstückkontur nach einer Programmunterbrechung wesentlich vereinfacht ist.

Diese Aufgabe wird erfindungsgemäss durch die kennzeichnenden Merkmale des Anspruchs 1 gelöst.

Die mit der Erfindung erzielten Vorteile bestehen insbesondere darin, dass ungeachtet der Kompliziertheit der vorliegenden Programmstruktur auf einfache Weise die Bestimmung des Endpunktes der steuerungsseitigen Abarbeitung des Programmes ermöglicht wird, so dass ein Wiederanfahren des Werkzeugs an die Werkstückkontur ohne Zeitverzögerung erfolgen und die Stillstandszeit der Bearbeitungsmaschine bei einer Programmunterbrechung wesentlich herabgesetzt werden können.

Vorteilhafte Weiterbildungen der Erfindung entnimmt man den Unteransprüchen.

Ein Ausführungsbeispiel der Erfindung wird anhand der Zeichnung näher erläutert. Es zeigen:

Figur 1 einen Ausschnitt einer Bearbeitungsmaschine mit einer numerischen Programmsteuereinrichtung und

Figur 2 eine zu fertigende Werkstückkontur.

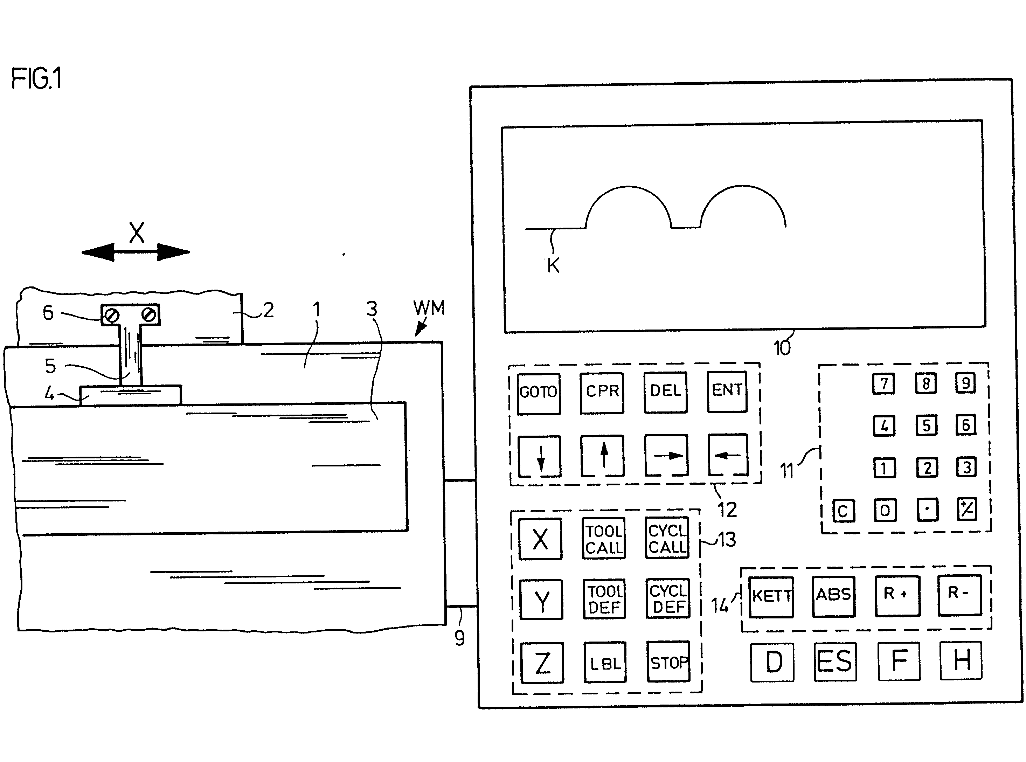

In Figur 1 sind ein Bett 1 und ein relativ zu diesem in X-Richtung (X-Achse) verschiebbarer Schlitten 2 einer beliebigen numerisch gesteuerten Werkzeugmaschine WM, beispielsweise einer Fräsmaschine, dargestellt. Die Relativbewegungen zwischen dem Bett 1 und dem Schlitten 2 werden von einem digitalen elektrischen Längenmessgerät gemessen, bei dem die Teilung eines in einem Massstabträger 3 angeordneten Massstabs von einer Abtasteinheit 4 in bekannter Weise abgetastet wird, die mit dem Schlitten 2 über einen Mitnehmer 5 und eine Schraubverbindung 6 verbunden ist; der Massstabträger 3 ist am Bett 1 der Werkzeugmaschine befestigt. Die Elemente dieser Werkzeugmaschine WM für die Y-Achse und Z-Achse sind nicht dargestellt.

Zur numerischen Steuerung der Werkzeugmaschine WM ist eine numerische Programmsteuereinrichtung 7 mit einer Steuertafel 8 mittels eines schwenkbaren Arms 9 am Bett 1 der Werkzeugmaschine WM befestigt. Diese Steuertafel 8 weist eine Anzeigeeinheit 10 zur alphanumerischen Darstellung von Programmsätzen S für das Bearbeitungsprogramm und/oder zur graphischen Darstellung von gemäss diesem Bearbeitungsprogramm zu fertigenden Werkstückkonturen K und/oder zu verfahrenden Werkzeugbahnen K', K" auf. Zur Eingabe numerischer Daten für die Programmsätze dienen Eingabetasten 11, wobei die eingegebenen Daten auf der Anzeigeeinheit 10 zur Kontrolle dargestellt werden. Weiter sind in bekannter Weise Steuertasten 12, Satzbeginntasten 13 und Vorwahltasten 14 für die Betriebsart vorgesehen. Auf der Anzeigeeinheit 10 werden ebenso für die X-, Y- und Z-Achse die jeweiligen Ist-Positionswerte des Werkzeugs W bei stattfindender Bearbeitung angezeigt.

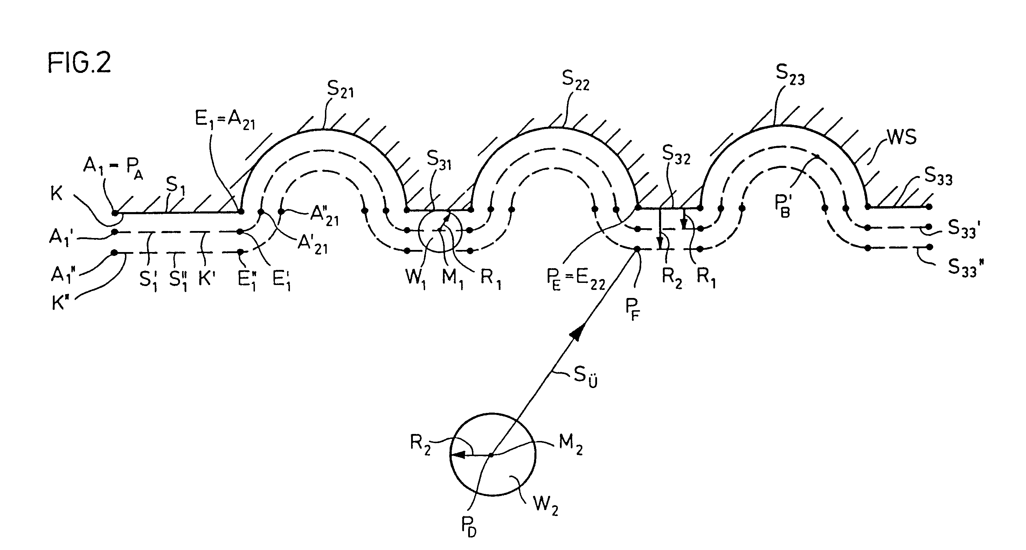

Das mittels der Tasten 11–14 aufgestellte Bearbeitungsprogramm für eine zu fertigende Kontur K eines Werkstücks WS gemäss Figur 2 ist durch einzelne Programmsätze $S_1$, $S_2$, $S_3$ festgelegt und in einem nicht dargestellten Speicher der Programmsteuereinrichtung 7 abgelegt. Die Programmsätze $S_1$, $S_3$ stellen Geraden mit den Anfangspunkten $A_1$, $A_3$ und den Endpunkten $E_1$, $E_3$ und der Programmsatz $S_2$ einen Halbkreis mit dem Anfangspunkt $A_2$ und dem Endpunkt $E_2$ dar. Nach dem Programmsatz $S_1$ sollen die Programmsätze $S_2$, $S_3$ sukzessive dreimal wiederholt werden und sind daher in Figur 2 als Programmsätze $S_{21}$–$S_{23}$, $S_{31}$–$S_{33}$ bezeichnet.

Der in der Programmsteuereinrichtung 7 vorhandene Rechner führt zwischen den Anfangspunkten $A_1$, $A_3$ und den Endpunkten $E_1$, $E_3$ der Programmsätze $S_1$, $S_3$ eine Geradeninterpolation und zwischen dem Anfangspunkt $A_2$ und dem Endpunkt $E_2$ des Programmsatzes $S_2$ eine Kreisinterpolation durch und errechnet aus diesen Werten unter Berücksichtigung eines Werkzeugkorrekturwertes $R_1$ (Radius $R_1$) des Werkzeugs $W_1$ die korrigierte Bahn K' für den Werkzeugmittelpunkt $M_1$, die durch die entsprechenden Programmsätze $S_1'$, $S_2'$, $S_3'$ festgelegt wird; den Punkten A, E auf der Werkstückkontur K sind die korrigierten Punkte A', E' auf der korrigierten Bahn K' zugeordnet.

Bei der Bearbeitung der Werkstückkontur K verfährt der Mittelpunkt $M_1$ des Werkzeugs $W_1$ auf der korrigierten Bahn K'. Beim Unterprogrammsatz $S_{23}$ möge am Punkt $P_B'$ der korrigierten Bahn K' ein Werkzeugbruch auftreten. Das Programm wird an dieser Stelle unterbrochen und das gebrochene Werkzeug $W_1$ zu einer Werkzeugwechselstelle verfahren. Nach dem Werkzeugwechsel wird das neue Werkzeug $W_2$ mit

dem Radius $R_2$ manuell an einen definierten Punkt $P_D$ gebracht.

Um von diesem definierten Punkt $P_D$ das neue Werkzeug $W_2$ wieder an die Werkstückkontur K zu verfahren, wird das Programm steuerungsseitig ohne Maschinenbewegungen erneut unter Berücksichtigung des neuen Werkzeugkorrekturwertes $R_2$ von einem vorgegebenen Anfangspunkt $P_A$ aus abgearbeitet. Dieser Anfangspunkt $P_A$ möge der Anfangspunkt $A_1$ des Programmsatzes $S_1$ sein. Mittels der Eingabetasten 11 auf der Steuertafel 8 wird die Satznummer des Programmsatzes $S_1$ gewählt und der neue Werkzeugkorrekturwert $R_2$ eingegeben. Durch Betätigen der Taste D beginnt ein Programmsatzdurchlauf, bei dem der neue Werkzeugkorrekturwert $R_2$ berücksichtigt wird und neue Programmsätze $S_1''$, $S_2''$, $S_3''$ für die korrigierte Bahn $K''$ für den Mittelpunkt $M_2$ des neuen Werkzeugs $W_2$ berechnet werden.

Um den Endpunkt $P_E$ dieses Programmsatzdurchlaufs und damit den zugeordneten Anfahrpunkt $P_F$ auf der korrigierten Bahn $K''$ für den Mittelpunkt $M_2$ des neuen Werkzeugs $W_2$ zu bestimmen, wird auf der Anzeigeeinheit 10 die bei dieser Programmabarbeitung resultierende Werkstückkontur K fortlaufend graphisch dargestellt. Die Bedienungsperson kann somit, eventuell durch Vergleich mit der bereits bearbeiteten Kontur K des Werkstücks WS den Endpunkt $P_E$ dieser steuerungsseitigen Programmabarbeitung rein visuell anhand der graphischen Darstellung der resultierenden Werkstückkontur K durch Betätigen einer «Halt»-Taste H festlegen, ohne die vorliegende Programmstruktur kennen oder berücksichtigen zu müssen. Dieser Endpunkt $P_E$ möge der Endpunkt $E_{22}$ des Programmsatzes $S_{22}$ sein, dem ein Anfahrpunkt $P_F$ auf der korrigierten Bahn $K''$ für den Mittelpunkt $M_2$ des neuen Werkzeugs $W_2$ zugeordnet ist. Diese Programmabarbeitung kann auch programmsatzweise durch Betätigen einer Einzelsatztaste ES bis zum gewünschten Endpunkt $P_E$ erfolgen.

Durch Betätigen einer Taste F auf der Steuertafel 8 wird die Werkzeugmaschine WM in ihren Achspositionen und in ihrem Funktionszustand auf den Programmzustand des Endpunkts $P_E$ der steuerungsseitigen Programmabarbeitung überführt. Anschliessend wird ein Übergangssatz Sü zwischen den Punkten $P_D$ und $P_F$ für den Mittelpunkt $M_2$ des Werkzeugs $W_2$ beispielsweise in Form einer Geraden berechnet, auf der das neue Werkzeug $W_2$ wieder an die Werkstückkontur K gefahren wird, so dass das unterbrochene Bearbeitungsprogramm mit Maschinenbewegungen fortgesetzt werden kann.

**Patentansprüche**

1. Verfahren zum Wiederanfahren eines Werkzeugs an eine Werkstückkontur nach einer Programmunterbrechung bei numerisch gesteuerten Bearbeitungsmaschinen mit einer Anzeigeeinheit zur alphanumerischen und/oder graphischen Darstellung von Bearbeitungsinformationen, bei denen in den Programmsätzen eines Bearbeitungsprogramms jeweils Konturabschnitte der zu fertigenden Werkstückkontur angegeben sind, bei dem nach einer Programmunterbrechung das Programm steuerungsseitig ohne Maschinenbewegungen erneut von einem vorgegebenen Anfangspunkt aus bis zu einem bestimmten Endpunkt abgearbeitet wird und bei dem die Maschine in ihren Achspositionen und in ihrem Funktionszustand auf den Programmzustand des Endpunktes der steuerungsseitigen Programmabarbeitung überführt und das Bearbeitungsprogramm mit Maschinenbewegungen von diesem Endpunkt aus nach dem Wiederanfahren des Werkzeugs an den gegebenenfalls zugehörigen Anfahrpunkt der Werkzeugbahn fortgesetzt werden, gekennzeichnet durch folgende Merkmale:

a) die bei dieser steuerungsseitigen Programmabarbeitung resultierende Werkstückkontur (K) und/oder Werkzeugbahn ($K'$, $K''$) werden auf der Anzeigeeinheit (10) fortlaufend graphisch dargestellt;

b) der Endpunkt ($P_E$) der steuerungsseitigen Programmabarbeitung wird anhand dieser graphischen Darstellung der resultierenden Werkstückkontur (K) bestimmt, dem gegebenenfalls ein Anfahrpunkt ($P_F$) für das Werkzeug ($W_2$) auf der Werkzeugbahn ($K''$) zugeordnet wird.

2. Verfahren nach Anspruch 1, dadurch gekennzeichnet, dass die steuerungsseitige Programmabarbeitung anhand der graphischen Darstellung in den Programmsätzen schrittweise oder durchlaufend bis zu einem Haltebefehl erfolgt.

3. Verfahren nach Anspruch 1, dadurch gekennzeichnet, dass der Anfahrpunkt ($P_F$) für das Werkzeug ($W_2$) unter Berücksichtigung eines neuen einzugebenden Werkzeugkorrekturwertes ($R_2$) bei der steuerungsseitigen Programmabarbeitung ermittelt wird.

**Claims**

1. Process for the reapproach of a tool to a workpiece contour after a program interruption of numerically controlled machine tools with a display unit for the alphanumeric and/or graphical representation of machining information, where the sentences of a machining program each indicate a contour portion of the workpiece contour to be produced, in which, after a program interruption, the program is reworked by the control, without machine movements, from a predetermined starting point to a specific final point, and in which the machine, in the positions of its coordinate axes and in its functional state, is transferred to the program status of the final point of the controlled program reworking, and the machining program is continued from this final point with machine movements, after the reapproach of the tool to the particular associated approach point of the tool path, characterized by the following features:

a) the workpiece contour (K) and/or tool path ($K'$, $K''$) resulting from this controlled program reworking are represented graphically on the display unit (10) continuously;

b) the final point ($P_E$) of the controlled program reworking is determined by means of this graphical representation of the resulting workpiece contour (K), to which, if appropriate, an approach point ($P_F$) for the tool ($W_2$) on the tool path (K'') is assigned.

2. Process according to Claim 1, characterized in that the controlled program reworking is carried out in the sentences in steps or continuously up to a halt command by means of the graphical representation.

3. Process according to Claim 1, characterized in that the approach point ($P_F$) for the tool ($W_2$) is determined during the controlled program reworking with allowance for a new tool correction value ($R_2$) to be entered.

**Revendications**

1. Procédé pour ramener un outil sur un profil de pièce à usiner, après une interruption de programme, dans le cas de machines d'usinage à commande numérique comprenant un poste de visualisation pour la représentation alphanumérique et/ou graphique d'informations d'usinage, des sections du profil de pièce à usiner étant indiquées à chaque fois dans les modules d'un programme d'usinage, procédé suivant lequel après une interruption du programme, le programme est de nouveau exécuté côté commande, sans mouvements de la machine, d'un point de début préétabli à un point final déterminé, et suivant lequel la machine, dans ses positions suivant les axes et dans son état fonctionnel, est amenée à l'état du programme au point final de l'exécution du programme, côté commande, et le programme d'usinage, avec mouvements de la machine, est poursuivi à partir de ce point final, après que l'outil ait été ramené au point de retour correspondant éventuel de la trajectoire de l'outil, caractérisé par le fait que:

a) le profil de pièce (K) et/ou la trajectoire d'outil (K', K'') résultant de cette exécution du programme, côté commande, sont représentés graphiquement, de façon continue, sur le poste de visualisation (10);

b) le point final ($P_E$) de l'exécution du programme, côté commande, est déterminé à l'aide de cette représentation graphique du profil de pièce (K) résultant, point final auquel est éventuellement affecté un point de retour ($P_F$) pour l'outil ($W_2$) sur la trajectoire d'outil (K'').

2. Procédé conforme à la revendication 1, caractérisé par le fait que l'exécution du programme, côté commande, a lieu à l'aide de la représentation graphique dans les modules de programme, pas à pas ou de façon continue jusqu'à une instruction d'arrêt.

3. Procédé conforme à la revendication 1, caractérisé par le fait que le point de retour ($P_F$) pour l'outil ($W_2$), est déterminé compte tenu d'une nouvelle valeur de correction d'outil ($R_2$) à introduire lors de l'exécution du programme, côté commande.

FIG.1

X

WM

K

6
2
1
3
5
4
5
9

10

| GOTO | CPR | DEL | ENT |
| ↓ | ↑ | → | ← |

12

11

| 7 | 8 | 9 |
| 4 | 5 | 6 |
| 1 | 2 | 3 |
| C | 0 | · | ½ |

| X | TOOL CALL | CYCL CALL |
| Y | TOOL DEF | CYCL DEF |
| Z | LBL | STOP |

13

14

| KETT | ABS | R + | R - |

| D | ES | F | H |

0 120 204

# FIG.2